# EUROPÄISCHE PATENTSCHRIFT

(11) **EP 4 080 068 B1**
(45) Veröffentlichungstag und Bekanntmachung des Hinweises auf die Patenterteilung: **20.08.2025**
(21) Anmeldenummer: 21170061.2
(22) Anmeldetag: 23.04.2021
(51) Int. Cl.: F16B 2/14, F16B 25/00, F16B 35/00, F16B 23/00, F16B 5/00, F16B 21/12

(54) **VERBINDER FÜR ZWEI BAUTEILE**
CONNECTOR FOR TWO COMPONENTS
CONNECTEUR POUR DEUX COMPOSANTS

(43) Veröffentlichungstag der Anmeldung: 26.10.2022
(73) Patentinhaber: Knapp GmbH, 3324 Euratsfeld (AT)
(72) Erfinder: KNAPP, Friedrich, 4362 Bad Kreuzen (AT)
(74) Vertreter: Weiser Voith Gugler Patentanwälte Partnerschaft

(56) Entgegenhaltungen:
- EP-A2- 2 444 562
- DE-C- 416 839
- DE-C- 491 041
- DE-U- 1 971 281
- US-A- 4 405 253
- US-A- 5 074 702

## Beschreibung

Die vorliegende Erfindung betrifft einen Verbinder für zwei Bauteile, insbesondere Holzbauteile, von denen der erste Bauteil eine von einer Anlagefläche für den zweiten Bauteil ausgehende erste Bohrung hat und der zweite Bauteil eine von einer Anlagefläche für den ersten Bauteil ausgehende, mit der ersten Bohrung korrespondierende Öffnung und eine die Öffnung quer durchsetzende zweite Bohrung hat.

Die Bauteile können aus Holz, Stein, Ziegel, Beton, Stahlbeton, Metall etc. und dabei insbesondere aus voneinander verschiedenem Material sein. Beispielsweise liegt der zweite Bauteil auf dem ersten Bauteil auf; so kann einer der beiden Bauteile ein Pfosten oder Ständer und der andere ein Träger, eine Schwelle od.dgl. sein.

Ein Verbinder für derartige Bauteile ist aus der US 5 741 083 bekannt; dieser Verbinder umfasst ein Verbindungsrohr, das nahe seiner beiden Enden von jeweils einem Langloch quer durchsetzt ist. Das Verbindungsrohr wird in die erste Bohrung des ersten Bauteils und in die damit korrespondierende Öffnung des zweiten Bauteils eingeführt. Im Bereich der Langlöcher ist ferner jeder der beiden Bauteile von einer zweiten Bohrung quer durchsetzt, sodass beim Aneinanderliegen der beiden Bauteile an ihren Anlageflächen jeweils ein Spreizbolzen in jede der beiden zweiten Bohrungen bis in das jeweilige Langloch im Verbindungsrohr eingeführt werden kann. Jeder Spreizbolzen hat eine axiale Zugschraube und zwei gegeneinander gerichtete Konusstücke und wird von zwei zylindrischen Halbschalen ummantelt. Nach dem Einführen wird jeder Spreizbolzen in dem Langloch ausgerichtet; dann werden die Halbschalen durch Zusammenziehen der Konusstücke mithilfe der Zugschrauben in Radialrichtung aufgezwängt. Die Spreizbolzen füllen dadurch die Langlöcher und spannen zugleich die Anlageflächen der beiden Bauteile gegeneinander.

Nachteilig ist dabei nicht nur, dass die beiden Bolzen einen komplexen, mehrteiligen Aufbau haben und beide Bauteile jeweils vollständig von den genannten zweiten Bohrungen durchsetzt sind, um die Spreizbolzen zum Ausrichten und Aufzwängen jeweils an ihren beiden Enden zugänglich zu machen, sondern insbesondere die schwierige Montage, während derer die Bolzen nicht verdreht werden sollen.

Die US 5 074 702 beschreibt einen Verbinder, bei welchem ein Haltebolzen unter Spiel beweglich hinter einem ersten Bauteil verschraubt und mit seinem Kopf in eine Öffnung in einem zweiten Bauteil eingeführt wird. Der Kopf hat eine konische Querbohrung, in welche eine korrespondierende konische Spitze einer in den zweiten Bauteil geschraubten Spannschraube eingreift. Dadurch werden einerseits die beiden Bauteile gegeneinander gezogen und andererseits der Haltebolzen zu seiner Fixierung gegen die der Spannschraube gegenüberliegende Wandung der Öffnung im zweiten Bauteil gepresst, was insgesamt zu einer asymmetrischen Zugverteilung im Haltebolzen und zu einer Scherbelastung der Spitze der Spannschraube führt. Die Spannschraube muss wegen der Konizität ihrer Spitze und der Querbohrung gegen Lockern gesichert werden.

Die EP 2 444 562 A2 offenbart einen Verbinder mit einem Zugbolzen, der in einer Gewindebohrung eines ersten Bauteils verschraubt wird und an seinem in eine Öffnung eines zweiten Bauteils einführbaren entgegengesetzten Ende von einer Gewindebohrung quer durchsetzt ist, in welche ein Spannschraube eingedreht wird, die bei weiterem Eindrehen an einer hinter der Gewindebohrung ausgebildeten schrägen Fläche des zweiten Bauteils abgleitet, wodurch die Spannschraube axial versetzt wird und den Zugbolzen tiefer in den zweiten Bauteil zieht. Dies erfordert eine besonders große, speziell geformte Öffnung im zweiten Bauteil, welche diesen zugleich schwächt.

Die Erfindung setzt sich zum Ziel, einen Verbinder für zwei Bauteile zu schaffen, der in seinem Aufbau besonders einfach und beim Verbinden der beiden Bauteile besonders unkompliziert zu handhaben ist und dennoch eine dauerhafte und feste Verbindung der Bauteile ergibt. Die Erfindung betrifft einen Verbinder gemäß Anspruch 1.

Dieses Ziel wird mit einem Verbinder für zwei Bauteile, insbesondere Holzbauteile, erreicht, von denen der erste Bauteil eine von einer Anlagefläche für den zweiten Bauteil ausgehende erste Bohrung hat und der zweite Bauteil eine von einer Anlagefläche für den ersten Bauteil ausgehende, mit der ersten Bohrung korrespondierende Öffnung und eine die Öffnung quer durchsetzende zweite Bohrung hat, welcher Verbinder einen Haltebolzen mit einem Gewindeabschnitt zum Verschrauben in oder hinter der ersten Bohrung und einem gewindelosen Abschnitt zum Einführen in die Öffnung, wobei der gewindelose Abschnitt von einer zylindrischen Querbohrung durchsetzt ist, und einen zylindrischen Spannbolzen mit spitzem konischem Ende hat, welcher, wenn der Haltebolzen seine in oder hinter der ersten Bohrung verschraubte und in die Öffnung eingeführte Stellung einnimmt, in die zweite Bohrung und in die Querbohrung einführbar ist, um diese aneinander auszurichten und so die Anlageflächen gegeneinander zu spannen.

Durch den Gewindeabschnitt des Haltebolzens entfällt am ersten Bauteil eine die erste Bohrung quer durchsetzende zweite Bohrung und somit die damit verbundene Schwächung des - oft tragenden - ersten Bauteils. Der Haltebolzen kann dabei - insbesondere bereits werkseitig - in oder hinter der ersten Bohrung verschraubt und dadurch am ersten Bauteil verankert werden und somit auch zum Manipulieren des ersten Bauteils genutzt werden. Der Haltebolzen kann am ersten Bauteil entsprechend tief verankert werden, sodass der besonders einfach aufgebaute Spannbolzen mit seinem konischen Ende beim Einführen in die Querbohrung die zweite Bohrung und die Querbohrung aneinander ausrichtet und die beiden Bauteile an ihren jeweiligen Anlageflächen gegeneinander spannt. Dadurch erzielt der Verbinder eine dauerhaft sichere und feste Verbindung unter Spannung der beiden Bauteile und lockert sich infolge der Reibungs- und Klemmkräfte des Spannbolzens am Haltebolzen nach dem Verbinden der beiden Bauteile nicht mehr. Für das Verbinden muss der Spannbolzen nicht beidseitig zugänglich sein, sodass die zweite Bohrung eine Sackbohrung sein kann, was eine allfällige Schwächung des zweiten Bauteils reduziert.

Besonders vorteilhaft ist, wenn der Spannbolzen einen das konische Ende umfassenden gewindelosen Abschnitt und einen Gewindeabschnitt mit einem gegenüber dem gewindelosen Abschnitt größeren Nenndurchmesser hat und an seiner dem konischen Ende abgewandten Stirnseite zum Angriff eines Schraubendrehers ausgebildet ist. Als Schraubendreher ist in diesem Zusammenhang jedes Werkzeug zu verstehen, das bei stirnseitigem Angriff einen Gewindebolzen (bzw. eine Schraube) um die Längsachse drehen kann, d.h. neben herkömmlichen Schlitz-, Kreuzschlitz-, oder anderen Schraubendrehern auch z.B. Innensechskantschlüssel od.dgl. Durch den Gewindeabschnitt wird das Einführen des Spannbolzens in die genannte zweite Bohrung des zweiten Bauteils und insbesondere in die Querbohrung des Haltebolzens vereinfacht, da die Drehbewegung in Abhängigkeit von der Gewindesteigung des Gewindeabschnitts entweder ein rasches Einführen oder ein langsames, gleichmäßiges Einführen unter Erzeugung einer hohen Kraft in Einführrichtung bewirkt. Überdies ermöglicht der Gewindeabschnitt ein späteres Lösen der Verbindung der beiden Bauteile durch einfaches Herausdrehen des Spannbolzens, d.h. insbesondere ohne zusätzliche Zugänglichkeit des Spannbolzens an seinem konischen Ende und somit auch ohne eine den zweiten Bauteil vollständig durchsetzende zweite Bohrung.

Das konische Ende des Spannbolzens ist entweder eine kurze Spitze, oder erstreckt sich über einen größeren Teil des Gewindelosen Abschnitts; in einer günstigen Ausführungsform, erstreckt sich das konische Ende des Spannbolzens über den gesamten gewindelosen Abschnitt. Damit ist ein kleinerer Konusöffnungswinkel und somit ein einfacheres Einführen des Spannbolzens in die Querbohrung erzielbar.

Besonders günstig ist, wenn das konische Ende des Spannbolzens einen Konusöffnungswinkel zwischen 20° und 120°, bevorzugt zwischen 40° und 60° hat. Je nach Material und Größe der Bauteile kann dadurch ein Spannbolzen verwendet werden, der entweder besonders rasch (größerer Konusöffnungswinkel) oder unter geringerem Kraftaufwand (kleinerer Konusöffnungswinkel) in die Querbohrung eingeführt werden kann; in jedem Fall ergibt sich eine sichere Verbindung der beiden Bauteile.

Der Haltebolzen kann massiv ausgeführt sein, vorteilhaft ist, wenn zumindest ein stirnseitiger Bereich des gewindelosen Abschnitts des Haltebolzens rohrförmig ist. Ist der Haltebolzen zumindest teilweise oder überhaupt vollständig rohrförmig, wird zusätzlich Gewicht gespart.

Besonders einfach lässt sich der Haltebolzen in die erste Bohrung eindrehen und damit am ersten Bauteil verankern und ausrichten, wenn der gewindelose Abschnitt des Haltebolzens einen stirnseitigen Einschnitt für den Angriff eines Montagewerkzeugs hat.

Günstig ist ferner, wenn der Haltebolzen an der dem genannten gewindelosen Abschnitt abgewandten Seite des Gewindeabschnitts einen weiteren gewindelosen Abschnitt mit einem dem Kerndurchmesser des Gewindeabschnitts entsprechenden oder kleineren Durchmesser hat. Der weitere gewindelose Abschnitt wirkt beim Verschrauben des Haltebolzens als Führung in der ersten Bohrung und vereinfacht somit das Verankern des Haltebolzens am ersten Bauteil.

In einer vorteilhaften Ausführungsform ist der Gewindeabschnitt des Haltebolzens zum Verschrauben mit einer Schraubenmutter ausgebildet. Dies ermöglicht ein breites Einsatzspektrum des Verbinders. Der Gewindeabschnitt kann dabei insbesondere als metrisches Gewinde ausgeführt sein, wobei der Haltebolzen hinter der ersten Bohrung z.B. mit einer korrespondierenden Schraubenmutter verschraubt wird und die erste Bohrung meist gewindelos ist. Je nach Material des ersten Bauteils kann zum Verschrauben des Haltebolzens alternativ die erste Bohrung nach Art einer Schraubenmutter mit einem korrespondierenden Innengewinde versehen sein.

Besonders günstig ist, wenn der Gewindeabschnitt des Haltebolzens eine oder mehrere über den Umfang verteilte, in Längsrichtung des Haltebolzens verlaufende Einfräsungen hat, welche bevorzugt bis zum Kerndurchmesser des Gewindeabschnitts reichen. Der Gewindeabschnitt des Haltebolzens schneidet dadurch beim Verschrauben selbst ein Innengewinde in die erste Bohrung.

Vorteilhaft ist ferner, wenn der Haltebolzen in einem an den Gewindeabschnitt anschließenden Bereich des genannten gewindelosen Abschnitts eine umlaufende Kerbung hat. Dadurch ist beim Verschrauben des Haltebolzens in oder hinter der ersten Bohrung die Tiefe des Verschraubens einfach erkennbar, indem die Kerbung als Messmarke verwendet wird, was die Handhabung des Verbinders weiter vereinfacht.

Die Erfindung wird nachstehend anhand von in den beigeschlossenen Zeichnungen dargestellten Ausführungsformen näher erläutert. In den Zeichnungen zeigen:
Fig. 1 einen erfindungsgemäßen Verbinder für zwei Bauteile in einer in einer teilweise transparenten Perspektivansicht von schräg oben;
die Fig. 2a und 2b der Verbinder von Fig. 1 in einer Offenstellung (Fig. 2a) und einer Verbindungsstellung (Fig. 2b), jeweils in einer Seitenansicht;
Fig. 3 die beiden mit dem Verbinder von Fig. 1 verbundenen Bauteile in einer teilweise transparenten Perspektivansicht von schräg oben;
Fig. 4 einen Haltebolzen des Verbinders von Fig. 1 in einer Perspektivansicht von schräg oben;
die Fig. 5a und 5b jeweils eine Variante eines Gewindeabschnitts des Haltebolzens oder eines Spannbolzens des Verbinders von Fig. 1 mit einer (Fig. 5a) oder zwei Einfräsungen (Fig. 5b), jeweils in Perspektivansicht von schräg oben; und
die Fig. 6a und 6b einen Transportaufsatz für den Haltebolzen von Fig. 4 in einer nicht-montierten (Fig. 6a) und einer an dem Haltebolzen montierten Stellung (Fig. 6b), jeweils in einer Perspektivansicht von schräg oben.

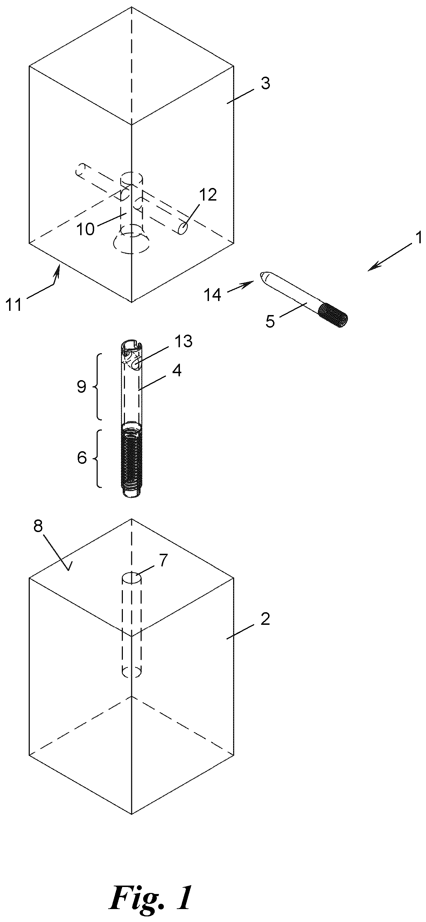

Die Fig. 1 zeigt einen Verbinder 1 zum Verbinden zweier Bauteile 2, 3. Bei den Bauteilen 2, 3 kann es sich um jede beliebige Art, z.B. einen Pfosten, einen Ständer, einen Träger, eine Schwelle, zwei Möbelteile usw.usf. aus jedem beliebigen Material, z.B. aus Holz, Kunststoff, Stein, Ziegel, Beton, Stahlbeton, Metall etc., auch aus jeweils verschiedenem Material handeln. Der Verbinder 1 ist zum Verbinden von Holzbauteilen 2, 3 besonders geeignet, beispielsweise im Möbelbau oder Industrieholzbau. Je nach den Festigkeitsanforderungen kann der Verbinder 1 aus verschiedenen Materialien gefertigt sein, z.B. aus Holz, Kunststoff, Metall oder Kombinationen daraus.

Der Verbinder hat einen Haltebolzen 4 und einen Spannbolzen 5. Der Haltebolzen 4 hat in seiner Axialrichtung einen Gewindeabschnitt 6, welcher im dargestellten Beispiel in einer ersten Bohrung 7 eines ersten Bauteils 2 der beiden Bauteile 2, 3 verschraubt werden kann. Die erste Bohrung 7 geht von einer Anlagefläche 8 für den zweiten Bauteil 3 aus, und zwar im dargestellten Beispiel senkrecht auf die Anlagefläche 8; die erste Bohrung 7 könnte alternativ jedoch von der Anlagefläche 8 schräg in das erste Bauteil 2 gebohrt sein. Im Beispiel der Fig. 1 ist die erste Bohrung 7 eine Sackbohrung. Alternativ kann die erste Bohrung 7 den ersten Bauteil 2 vollständig durchsetzen und der Haltebolzen 4 optional hinter der ersten Bohrung verschraubt sein, z.B. mit einer Schraubenmutter (nicht dargestellt). Der Gewindeabschnitt 6 des Haltebolzens 4 und die Schraubenmutter können dazu z.B. metrische Gewinde oder andere korrespondierende Gewinde haben. Wird der Gewindeabschnitt 6 wie im Beispiel der Fig. 1 direkt in der ersten Bohrung 7 verschraubt, hat er optional die Gewindeform z.B. einer Holzschraube, wenn der erste Bauteil 2 aus Holz od.dgl. ist, etc.

An den Gewindeabschnitt 6 in Axialrichtung anschließend hat der Haltebolzen 4 ferner einen gewindelosen Abschnitt 9, welcher zum Verbinden der beiden Bauteile 2, 3 in eine Öffnung 10 am zweiten Bauteil 3 eingeführt werden kann. Die Öffnung 10 geht von einer Anlagefläche 11 des zweiten Bauteils 3 zur Anlage des ersten Bauteils 2 aus und korrespondiert mit der ersten Bohrung 7 des ersten Bauteils 2, um den gewindelosen Abschnitt 9 des Haltebolzens 4 aufzunehmen; d.h. die Öffnung 10 kann beim Anliegen der Anlageflächen 8, 11 der beiden Bauteile 2, 3 aneinander in Verlängerung der ersten Bohrung 7 angeordnet werden. Im dargestellten Beispiel ist die Öffnung 10 ebenfalls eine Bohrung, d.h. sie hat einen kreisrunden Querschnitt; alternativ könnte sie jedoch auch einen anderen Querschnitt haben, welcher das Einführen des Haltebolzens 4 erlaubt, insbesondere kann die Öffnung 10 z.B. schlitzförmig sein. Die Öffnung 10 ist von einer zweiten Bohrung 12 quer durchsetzt.

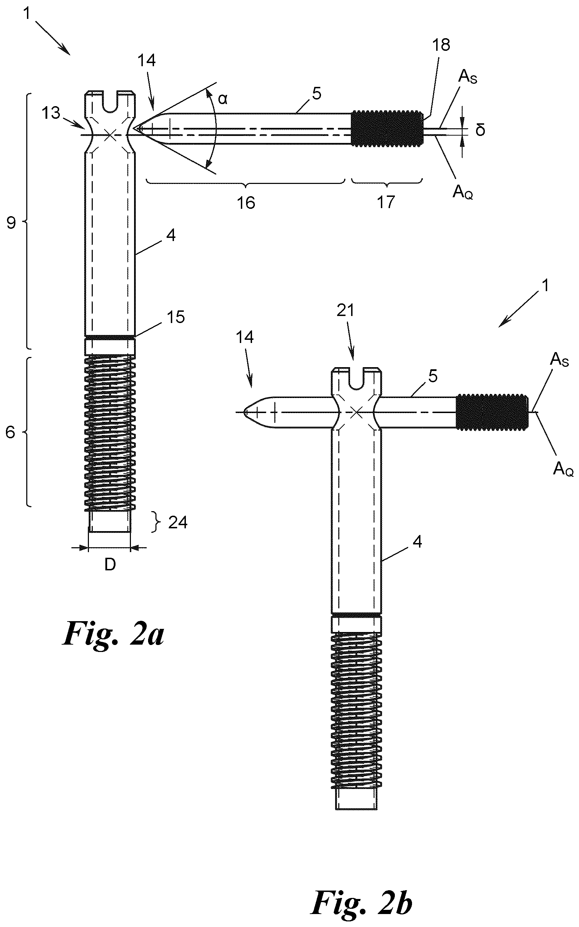

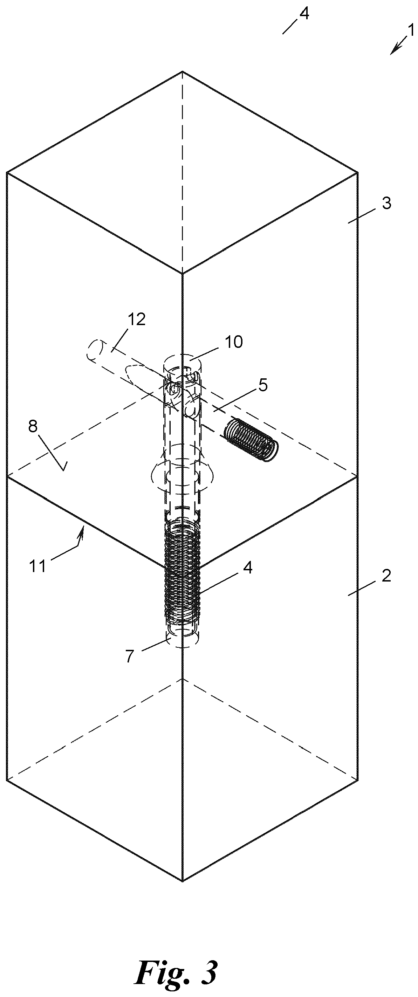

Anhand der Fig. 2a, 2b und 3 wird im Folgenden das Verbinden der beiden Bauteile 2, 3 mithilfe des Haltebolzens 4 und des Spannbolzens 5 des Verbinders 1 erläutert, wozu der Haltebolzen 4 eine Querbohrung 13 zum Einführen des Spannbolzens 5 und der Spannbolzen 5 ein konisches Ende 14 hat.

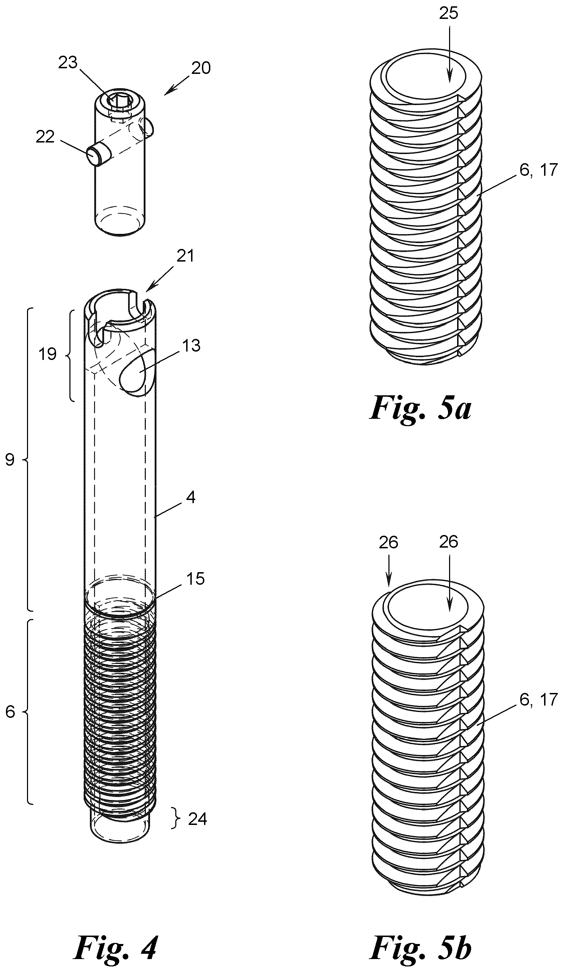

Zunächst wird der Gewindeabschnitt 6 des Haltebolzens 4 in oder hinter der ersten Bohrung 7 mit dem ersten Bauteil 2 verschraubt, z.B. bis zum Ende des Gewindeabschnitts 6 oder bis zu einer optionalen umlaufenden Kerbung 15 in einem an den Gewindeabschnitt 6 des Haltebolzens 4 anschließenden Bereich seines gewindelosen Abschnitts 9. Darauf wird der gewindelose Abschnitt 9 des Haltebolzens 4 in die Öffnung 10 des zweiten Bauteils 3 eingeführt bzw. der zweite Bauteil 3 aufgesetzt, bis die beiden Anlageflächen 8, 11 aneinander anliegen. Die Querbohrung 13 des Haltebolzens 4 wird dabei gegenüber der zweiten Bohrung 12 ausgerichtet, u.zw. entweder bereits vor dem Einführen des gewindelosen Abschnitts 9 des Haltebolzens 4 in die Öffnung 10 oder nach dem Einführen, wenn Haltebolzen 4 weiter zugänglich bleibt, z.B. weil sein Gewindeabschnitt 6 hinter der ersten Bohrung 7 verschraubt ist oder weil, wie weiter unten unter Bezugnahme auf Fig. 4 näher erläutert wird, die Öffnung 10 den zweiten Bauteil 3 vollständig durchsetzt. Das Ausrichten der Querbohrung 13 erfolgt einerseits in Axialrichtung der zweiten Bohrung 12 des zweiten Bauteils 3; andererseits soll der gewindelose Abschnitt 9 des Haltebolzens 4 nach seinem Verschrauben aus der Anlagefläche 8 des ersten Bauteils 2 lediglich so weit hervorragen, dass zwischen einer Achse A_{Q} der Querbohrung des Haltebolzens 4 und einer Längsachse A_{S} des Spannbolzens 5 ein Versatz δ verbleibt, wenn der Spannbolzen 5 mit seinem konischen Ende 14 voran zunächst nur in die zweite Bohrung 12 eingeführt wird (Fig. 2a), z.B. eingedrückt oder mit einem Hammer eingeschlagen wird, wenn der Spannbolzen 13 gewindelos ist. Der Versatz δ wird z.B. in Abhängigkeit vom Material des ersten und zweiten Bauteils 2, 3, bzw. des Halte- und des Spannbolzens 4, 5 und/oder von einem Konusöffnungswinkel α des konischen Endes 14 des Spannbolzens 5 gewählt.

Wird der Spannbolzen 5 in dieser Stellung des Haltebolzens 4 weiter in die zweite Bohrung 12 eingeführt, tritt zunächst sein konisches Ende 14 in die Querbohrung 13 des Haltebolzens 4 ein; darauf richtet der Spannbolzen 5 die zweite Bohrung 12 und die Querbohrung 13 aneinander aus, d.h. der Spannbolzen 13 zieht infolge seines konischen Endes 14 den Haltebolzen 4 tiefer in die Öffnung 10 des zweiten Bauteils 3, sodass der Versatz δ ausgeglichen wird (Fig. 2b), und spannt so die Anlageflächen 8, 11 der beiden Bauteile 2, 3 gegeneinander (Fig. 3).

In dem dargestellten Beispiel hat der Spannbolzen 13 einen gewindelosen Abschnitt 16, welcher auch das konische Ende 14 umfasst, und einen in seiner Axialrichtung daran anschließenden optionalen Gewindeabschnitt 17. Der Gewindeabschnitt 17 hat einen gegenüber dem gewindelosen Abschnitt 16 größeren Nenndurchmesser, d.h. er überragt mit seinem Gewinde den gewindelosen Abschnitt 16 radial. Ferner hat der Spannbolzen 13 an seiner dem konischen Ende 14 abgewandten Stirnseite 18 einen Innensechskant, einen Kreuzschlitz, einen Schlitz od.dgl. zum Angriff eines Schraubendrehers. Zum Einführen seines gewindelosen Abschnitts 16 in die Querbohrung 13 des Haltebolzens 4 kann der Spannbolzen 13 so in die zweite Bohrung 12 eingedreht und bei Bedarf später wieder aus dieser herausgedreht werden.

Das konische Ende 14 des Spannbolzens 5 kann sich über einen Teil des gewindelosen Abschnitts 16 des Spannbolzens 5 oder über dessen gesamten gewindelosen Abschnitt 16 erstrecken. Der Konusöffnungswinkel α liegt beispielsweise zwischen 20° und 120°, insbesondere zwischen 40° und 60°; alternativ kann der Konusöffnungswinkel α größer oder insbesondere kleiner sein. Es versteht sich, dass die Spitze des konischen Endes 14, wie dargestellt, abgestumpft sein kann.

Wie im Beispiel der Fig. 4 durch eine strichlierte Linie versinnbildlicht, ist der Haltebolzen 4 optional rohrförmig. Alternativ ist der Haltebolzen 4 massiv oder nur bereichsweise rohrförmig, z.B. in einem stirnseitigen Bereich 19 des gewindelosen Abschnitts 9 des Haltebolzens 4, um ein optionales Montagewerkzeug 20 zumindest teilweise aufnehmen zu können. Der gewindelose Abschnitt 9 des Haltebolzens 4 hat dazu ferner einen stirnseitigen Einschnitt 21, an welchem ein Querstift 22 des Montagewerkzeugs 20 in seinem eingesetzten Zustand angreift. Das Montagewerkzeug 20 hat ferner einen Innensechskant 23 für den Angriff eines entsprechenden Schlüssels zum Verschrauben des Haltebolzens 4 bzw. seines Gewindeabschnitts 6 in oder hinter der ersten Bohrung 7 des ersten Bauteils 2. Es versteht sich, dass der stirnseitige Einschnitt 21 alternativ auch zum Eingriff eines Schlitz-Schraubendrehers, eines stabförmigen Drehgriffs od.dgl. zum Verschrauben verwendbar ist, u.zw. auch wenn der Haltebolzen 4 massiv ist. Durchsetzt die Öffnung 10 den zweiten Bauteil 3 vollständig, ist der stirnseitige Einschnitt 21 auch nach dem Einführen des gewindelosen Abschnitts 9 des Haltebolzens 4 in die Öffnung 10 zugänglich, sodass seine Querbohrung 10 wie beschrieben ausgerichtet werden kann.

In dem dargestellten Beispiel hat der Haltebolzen 4 an seiner dem gewindelosen Abschnitt 9 abgewandten Seite des Gewindeabschnitts 6 einen optionalen weiteren gewindelosen Abschnitt 24. Der weitere gewindelose Abschnitt 24 hat einen Durchmesser D, welcher dem Kerndurchmesser - d.h. dem kleinsten Durchmesser der Gewindegeometrie - des Gewindeabschnitts 6 des Haltebolzens 4 entspricht oder kleiner ist.

Die Fig. 5a und 5b zeigen optionale Ausführungsvarianten für die Gewindeabschnitte 6 bzw. 17 des Haltebolzens 4 bzw. des Spannbolzens 5 (hier: für den Gewindeabschnitt 6 des Haltebolzens 4). Im Beispiel der Fig. 5a hat der Gewindeabschnitt 6 eine in Längsrichtung des Haltebolzens 4 verlaufende Einfräsung 25. Die Einfräsung 25 reicht optional bis zum Kerndurchmesser des Gewindeabschnitts 6 und läuft in Umfangsrichtung allmählich aus. Im Beispiel der Fig. 5b hat der Gewindeabschnitt 6 zwei über den Umfang verteilte Einfräsungen 26, welche ebenfalls in Längsrichtung des Haltebolzens 4 bzw. Spannbolzens 5 verlaufen und optional bis zum Kerndurchmesser des Gewindeabschnitts 6, 17 reichen; jedoch haben die Einfräsungen 26 im Beispiel der Fig. 5b Dreieckform, d.h. sind nicht verlaufend.

Es versteht sich, dass alternativ über den Umfang des jeweiligen Gewindeabschnitts 6, 17 mehr als zwei Einfräsungen 25, 26 verteilt sein, die Einfräsungen 25, 26 radial nicht bis zum Kerndurchmesser des jeweiligen Gewindeabschnitts 6, 17 und/oder in Axialrichtung nur über einen Teil des jeweiligen Gewindeabschnitts 6, 17 reichen bzw. schräg zur Längsrichtung des Halte- bzw. Spannbolzens 4, 5 gerichtet sein können.

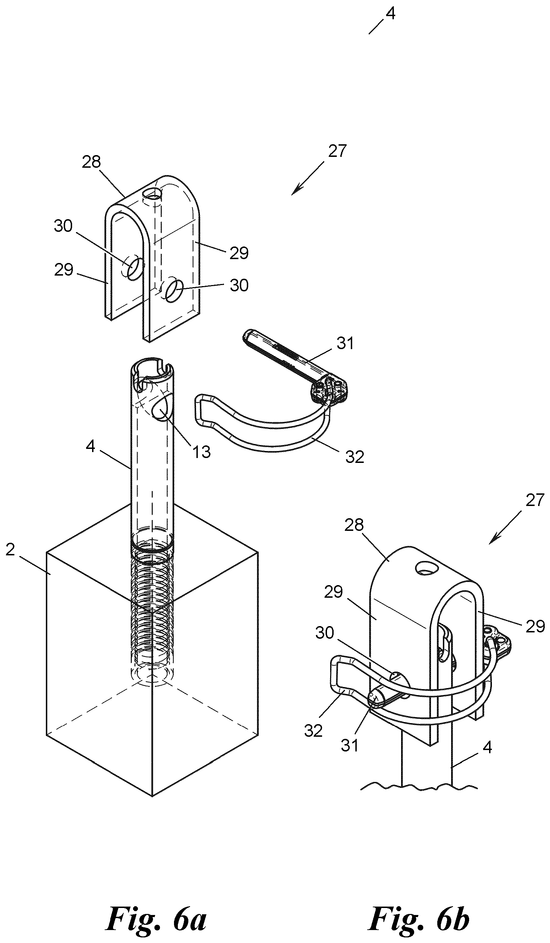

Gemäß den Fig. 6a und 6b kann der Haltebolzen 4, insbesondere nach Verschrauben seines Gewindeabschnitts 6 in oder hinter der ersten Bohrung 7 des ersten Bauteils 2, mit einem Transportaufsatz 27 versehen werden. Der Transportaufsatz 27 hat im dargestellten Beispiel eine im Wesentlichen U-förmige Lasche 28, deren Schenkel 29 von jeweils einer Aufnahmebohrung 30 für einen Stift 31 durchsetzt sind. Mit dem Stift 31 wird die Lasche 28 an der Querbohrung 13 des Haltebolzens 4 verankert und mit einer optionalen Sicherungsspange 32 gesichert, sodass der Haltebolzen 4 und - nach dem Verschrauben - der erste Bauteil 2 an der Lasche 28 einfach transportiert bzw. manipuliert werden können (Fig. 6b).

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Verbinder für zwei Bauteile (2, 3), insbesondere Holzbauteile, von denen der erste Bauteil (2) eine von einer Anlagefläche (8) für den zweiten Bauteil (3) ausgehende erste Bohrung (7) hat und der zweite Bauteil (3) eine von einer Anlagefläche (11) für den ersten Bauteil (2) ausgehende, mit der ersten Bohrung (7) korrespondierende Öffnung (10) und eine die Öffnung (10) quer durchsetzende zweite Bohrung (12) hat, umfassend einen Haltebolzen (4) mit einem Gewindeabschnitt (6) zum Verschrauben in oder hinter der ersten Bohrung (7) und einem gewindelosen Abschnitt (9) zum Einführen in die Öffnung (10), wobei der gewindelose Abschnitt (9) von einer zylindrischen Querbohrung (13) durchsetzt ist, **gekennzeichnet durch**
einen zylindrischen Spannbolzen (5) mit spitzem konischem Ende (14), welcher, wenn der Haltebolzen (4) seine in oder hinter der ersten Bohrung (7) verschraubte und in die Öffnung (10) eingeführte Stellung einnimmt, in die zweite Bohrung (12) und in die Querbohrung (13) einführbar ist, um diese aneinander auszurichten und so die Anlageflächen (8, 11) gegeneinander zu spannen.

2. Verbinder nach Anspruch 1, **dadurch gekennzeichnet, dass** der Spannbolzen (5) einen das konische Ende (14) umfassenden gewindelosen Abschnitt (16) und einen Gewindeabschnitt (17) mit einem gegenüber dem gewindelosen Abschnitt (16) größeren Nenndurchmesser hat und an seiner dem konischen Ende (14) abgewandten Stirnseite (18) zum Angriff eines Schraubendrehers ausgebildet ist.

3. Verbinder nach Anspruch 2, **dadurch gekennzeichnet, dass** sich das konische Ende (14) des Spannbolzens (5) über den gesamten gewindelosen Abschnitt (16) erstreckt.

4. Verbinder nach einem der Ansprüche 1 bis 3, **dadurch gekennzeichnet, dass** das konische Ende (14) des Spannbolzens (5) einen Konusöffnungswinkel (α) zwischen 20° und 120°, bevorzugt zwischen 40° und 60° hat.

5. Verbinder nach einem der Ansprüche 1 bis 4, **dadurch gekennzeichnet, dass** zumindest ein stirnseitiger Bereich (19) des gewindelosen Abschnitts (9) des Haltebolzens (4) rohrförmig ist.

6. Verbinder nach einem der Ansprüche 1 bis 5, **dadurch gekennzeichnet, dass** der gewindelose Abschnitt (9) des Haltebolzens (4) einen stirnseitigen Einschnitt (21) für den Angriff eines Montagewerkzeugs (20) hat.

7. Verbinder nach einem der Ansprüche 1 bis 6, **dadurch gekennzeichnet, dass** der Haltebolzen (4) an der dem genannten gewindelosen Abschnitt (9) abgewandten Seite des Gewindeabschnitts (6) einen weiteren gewindelosen Abschnitt (24) mit einem dem Kerndurchmesser des Gewindeabschnitts (6) entsprechenden oder kleineren Durchmesser (D) hat.

8. Verbinder nach einem der Ansprüche 1 bis 7, **dadurch gekennzeichnet, dass** der Gewindeabschnitt (6) des Haltebolzens (4) zum Verschrauben mit einer Schraubenmutter ausgebildet ist.

9. Verbinder nach einem der Ansprüche 1 bis 8, **dadurch gekennzeichnet, dass** der Gewindeabschnitt (6) des Haltebolzens (4) eine oder mehrere über den Umfang verteilte, in Längsrichtung des Haltebolzens (4) verlaufende Einfräsungen (25, 26) hat, welche bevorzugt bis zum Kerndurchmesser des Gewindeabschnitts (6) reichen.

10. Verbinder nach einem der Ansprüche 1 bis 9, **dadurch gekennzeichnet, dass** der Haltebolzen (4) in einem an den Gewindeabschnitt (6) anschließenden Bereich des genannten gewindelosen Abschnitts (9) eine umlaufende Kerbung (15) hat.

## Claims

1. A connector for two components (2, 3), in particular wooden components, of which the first component (2) has a first bore (7) which extends from a bearing surface (8) for the second component (3) and the second component (3) has an opening (10) which extends from a bearing surface (11) for the first component (2) and corresponds with the first bore (7) and has a second bore (12) transversing the opening (10), comprising a retaining bolt (4) with a threaded portion (6) for screwing into or behind the first bore (7) and an unthreaded portion (9) for inserting into the opening (10), wherein the unthreaded portion (9) is traversed by a cylindrical transverse bore (13), **characterised by**
a cylindrical tensioning bolt (5) with a pointed conical end (14), which, when the retaining bolt (4) assumes its position screwed into or behind the first bore (7) and inserted into the opening (10), can be inserted into the second bore (12) and into the transverse bore (13) in order to align them relative to one another and thus tension the bearing surfaces (8, 11) against one another.

2. The connector according to claim 1, **characterised in that** the tensioning bolt (5) has an unthreaded portion (16) comprising the conical end (14) and a threaded portion (17) with a larger nominal diameter than the unthreaded portion (16) and is configured for the application of a screwdriver on its end face (18) facing away from the conical end (14).

3. The connector according to claim 2, **characterised in that** the conical end (14) of the tensioning bolt (5) extends over the entire unthreaded portion (16).

4. The connector according to any one of claims 1 to 3, **characterised in that** the conical end (14) of the tensioning bolt (5) has a cone opening angle (α) of between 20° and 120°, preferably between 40° and 60°.

5. The connector according to any one of claims 1 to 4, **characterised in that** at least one end-face region (19) of the unthreaded portion (9) of the retaining bolt (4) is tubular.

6. The connector according to any one of claims 1 to 5, **characterised in that** the unthreaded portion (9) of the retaining bolt (4) has an end-face notch (21) for the application of an assembly tool (20).

7. The connector according to any one of claims 1 to 6, **characterised in that** the retaining bolt (4) has on the side of the threaded portion (6) facing away from said unthreaded portion (9) a further unthreaded portion (24) with a diameter (D) corresponding to or smaller than the core diameter of the threaded portion (6).

8. The connector according to any one of claims 1 to 7, **characterised in that** the threaded portion (6) of the retaining bolt (4) is configured to be screwed to a screw nut.

9. The connector according to any one of claims 1 to 8, **characterised in that** the threaded portion (6) of the retaining bolt (4) has one or more millings (25, 26) distributed around the circumference and running in longitudinal direction of the retaining bolt (4), which preferably extend to the core diameter of the threaded portion (6).

10. The connector according to any one of claims 1 to 9, **characterised in that** the retaining bolt (4) has a circumferential indentation (15) in a region of said unthreaded portion (9) adjoining the threaded portion (6).

## Revendications

1. Raccord pour deux éléments (2, 3), notamment des éléments en bois, parmi lesquels le premier élément (2) possède un premier alésage (7) partant d'une surface de contact (8) pour le deuxième élément (3) et le deuxième élément (3) possède un orifice (10), partant d'une surface de contact (11) pour le premier élément (2), correspondant au premier alésage (7), et un deuxième alésage (12) traversant transversalement l'orifice (10), comprenant un boulon de retenue (4) avec un tronçon fileté (6) pour le vissage dans ou derrière le premier alésage (7) et un tronçon sans filetage (9) pour l'insertion dans l'orifice (10), dans lequel le tronçon sans filetage (9) est traversé par un alésage transversal (13) cylindrique, **caractérisé par**
un boulon de serrage (5) cylindrique avec une extrémité (14) pointue conique, lequel, lorsque le boulon de retenue (4) adopte sa position vissée dans ou derrière le premier alésage (7) et insérée dans l'orifice (10), peut être inséré dans le deuxième alésage (12) et dans l'alésage transversal (13) afin de les aligner l'un sur l'autre et de serrer ainsi les surfaces de contact (8, 11) l'une contre l'autre.

2. Raccord selon la revendication 1, **caractérisé en ce que** le boulon de serrage (5) possède un tronçon sans filetage (16) comprenant l'extrémité (14) conique et un tronçon fileté (17) avec un diamètre nominal supérieur à celui du tronçon sans filetage (16) et est conçu pour l'engagement d'un tournevis sur sa face frontale (18) opposée à l'extrémité (14) conique.

3. Raccord selon la revendication 2, **caractérisé en ce que** l'extrémité (14) conique du boulon de serrage (5) s'étend sur tout le tronçon sans filetage (16).

4. Raccord selon l'une des revendications 1 à 3, **caractérisé en ce que** l'extrémité (14) conique du boulon de serrage (5) possède un angle d'ouverture de cône (α) entre 20 ° et 120 °, de préférence entre 40 ° et 60 °.

5. Raccord selon l'une des revendications 1 à 4, **caractérisé en ce qu'**au moins une zone frontale (19) du tronçon sans filetage (9) du boulon de retenue (4) est tubulaire.

6. Raccord selon l'une des revendications 1 à 5, **caractérisé en ce que** le tronçon sans filetage (9) du boulon de retenue (4) possède une entaille (21) frontale pour l'engagement d'un outil de montage (20).

7. Raccord selon l'une des revendications 1 à 6, **caractérisé en ce que** le boulon de retenue (4) possède, sur le côté opposé audit tronçon sans filetage (9) du tronçon fileté (6), un tronçon sans filetage (24) supplémentaire avec un diamètre (D) correspondant ou inférieur au diamètre du noyau du tronçon fileté (6).

8. Raccord selon l'une des revendications 1 à 7, **caractérisé en ce que** le tronçon fileté (6) du boulon de retenue (4) est conçu pour le vissage avec un écrou de vissage.

9. Raccord selon l'une des revendications 1 à 8, **caractérisé en ce que** le tronçon fileté (6) du boulon de retenue (4) possède un ou plusieurs fraisages (25, 26) répartis sur le pourtour s'étendant dans la direction longitudinale du boulon de retenue (4), lesquels vont de préférence jusqu'au diamètre du noyau du tronçon fileté (6).

10. Raccord selon l'une des revendications 1 à 9, **caractérisé en ce que** le boulon de retenue (4) possède une encoche (15) circonférentielle dans une zone dudit tronçon sans filetage (9) adjacente au tronçon fileté (6).
